# DEMANDE DE BREVET EUROPEEN

(11) **EP 1 265 290 A1**
(43) Date de publication de la demande: **11.12.2002**
(21) Numéro de dépôt: 01202207.5
(22) Date de dépôt: 08.06.2001
(51) Int. Cl.: H01L 27/146, H04N 3/15

(54) **Procédé permettant d'opérer un capteur d'image CMOS avec une sensibilité accrue**

(71) Demandeur: ASULAB S.A., 2074 Marin (CH)
(72) Inventeur: Grupp, Joachim, 2073 Enges (CH); Estelle, Jacquet, 2000 Neuchâtel (CH); Wüthrich, Christian, 2068 Hauterive (CH); Doering, Elko, 2572 Möringen (CH)
(74) Mandataire: Ravenel, Thierry Gérard Louis

(57) **Abrégé**

Il est décrit un procédé permettant d'opérer un capteur d'image CMOS comportant une pluralité de pixels (50), chacun des pixels comportant un élément photo-détecteur (PD) produisant des porteurs de charge en proportion de son illumination et un moyen de stockage (C1) susceptible d'être couplé et découplé de l'élément photo-détecteur à un instant déterminé afin de mémoriser, sur un noeud mémoire (B) du pixel, un signal de mesure représentatif des porteurs de charge produits par l'élément photo-détecteur.

Chaque pixel comprend au moins un premier transistor MOS (M2) connecté par ses terminaux de source et de drain respectivement au l'élément photo-détecteur et au moyen de stockage.

Au moins lors de l'étape d'exposition du pixel, une tension de niveau intermédiaire (V_{INT}) est appliquée sur le terminal de grille du premier transistor, cette tension intermédiaire étant sélectionnée de sorte que les porteurs de charge produits par l'élément photo-détecteur sont intégralement transférés via le premier transistor sur le moyen de stockage.

## Description

La présente invention concerne généralement un capteur d'image intégré et un procédé permettant d'opérer un tel capteur d'image intégré. Plus particulièrement, la présente invention concerne un capteur d'image intégré en technologie CMOS et un procédé permettant d'opérer un tel capteur d'image CMOS avec une sensibilité accrue. De tels capteurs d'image CMOS sont en particulier destinés à la réalisation de dispositifs photographiques et vidéos intégrés.

Grâce aux technologies actuelles d'intégration, il est possible de réaliser sous forme intégrée un dispositif opérationnel de prise d'images. Un tel dispositif intégré de prise d'images incorpore, sur une même puce, un composant photo-détecteur formé d'un ensemble d'éléments photo-détecteurs organisés typiquement sous forme de matrice, et un composant de traitement destiné à assurer les opérations de prise d'images et de lecture de l'information capturée par le composant photo-détecteur.

Traditionnellement, les dispositifs intégrés de prise d'images font appel à des techniques de transfert de charge. Selon ces techniques, des charges photo-générées sont collectées et transférées d'une manière déterminée. Les techniques de transfert de charge les plus communes utilisent des composants CCD ("charge-coupled devices") ou des composants CID ("charge injection devices"). Bien que ces dispositifs employant ces composants aient trouvé de nombreuses applications commerciales, ceux-ci présentent néanmoins de sérieux désavantages. En particulier, ces composants font appel à des techniques de fabrication non standards, et en particulier incompatibles avec les processus de fabrication CMOS standards. Des tels composants sont donc des obstacles, en termes de coût et de facilité de fabrication, à l'intégration totale de capteurs d'images.

En complément des techniques susmentionnées, un concept a été développé autour de l'utilisation de jonctions p-n semi-conducteurs comme éléments photo-détecteurs, ces jonctions étant communément dénommées photodiodes. L'avantage essentiel de tels éléments est leur parfaite compatibilité avec les processus de fabrication CMOS standard. On connaît ainsi de l'art antérieur, notamment du document "A Random Access Photodiode Array for Intelligent Image Capture" de Orly Yadid-Pecht, Ran Ginosar et Yosi Shacham Diamand, IEEE Transactions On Electron Devices, Vol. 38, no. 8, août 1991, pp. 1772-1780, incorporé ici par référence, des solutions faisant appel à des photodiodes comme éléments photo-détecteurs.

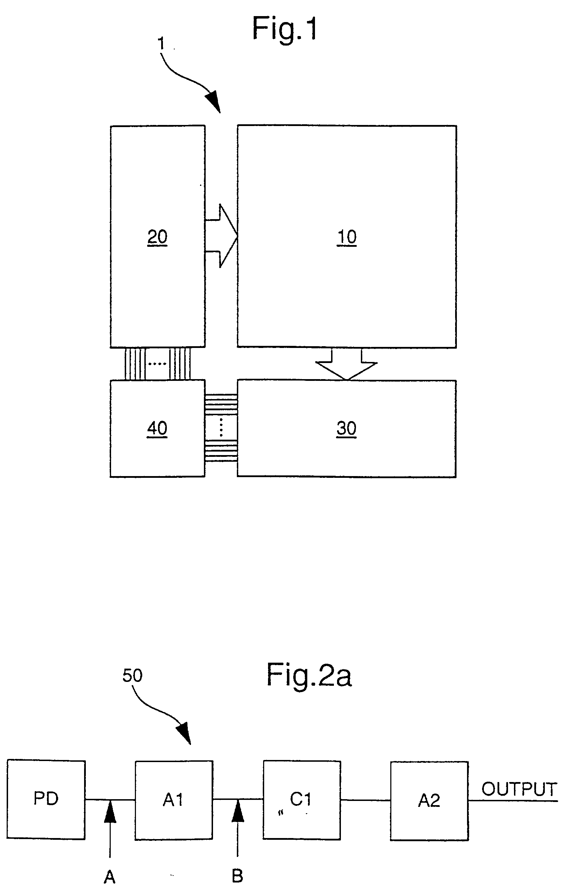

Ce document décrit ainsi un capteur d'image intégré en technologie CMOS sous forme d'une unique puce. L'architecture de ce capteur, qui est similaire à celle de mémoires RAM, est illustrée à la figure 1. Ce capteur, indiqué généralement par la référence numérique 1, comporte une matrice 10 de pixels agencés en M lignes et N colonnes. Cette matrice 10 occupe la majeure partie de la surface du capteur. La lecture d'un pixel particulier de la matrice 10 est effectué par l'adressage de la ligne et de la colonne correspondantes. A cet effet, le capteur comprend en outre un circuit d'adressage de ligne 20 couplé aux lignes de la matrice 10 et un bus de sortie 30 couplé aux colonnes de la matrice 10, tous deux commandés par un circuit de commande 40.

Chaque pixel de la matrice 10 possède une structure conforme à l'illustration de la figure 2a. Ce pixel, indiqué généralement par la référence numérique 50 dans la figure 2a, comporte un élément photo-détecteur PD, un premier étage A1, un moyen de stockage C1 et un second étage A2. L'élément photo-détecteur PD est formé d'une photodiode polarisée inverse qui opère typiquement par collecte des électrons photo-générés durant une période dite d'intégration. Le premier étage A1 est un circuit de type "sample-and-hold" assurant l'échantillonnage, à un temps déterminé, de la valeur de tension présente aux bornes de la photodiode PD. Cette valeur échantillonnée est mémorisée dans le moyen de stockage C1 qui est typiquement formé d'une capacité. On notera que la valeur de la tension stockée sur la capacité C1 dépend de la fonction de transfert du premier étage A1 et en particulier du rapport entre la valeur de la capacité (C_{PD}) de la photodiode PD et de la capacité du moyen de stockage C1. Le second étage A2 permet quant à lui d'assurer la lecture de la tension échantillonnée mémorisée dans le moyen de stockage C1. La structure schématiquement décrite dans la figure 2a permet avantageusement la séparation des processus de détection et de lecture.

La structure générale du pixel illustrée dans la figure 2a permet ainsi de réaliser une fonction dite d'obturation électronique permettant d'exposer simultanément tous les pixels du capteur et de mémoriser, dans chaque pixel, le signal représentatif de cette exposition en vue d'une lecture ultérieure. Au moyen de cette structure, on peut ainsi réaliser un capteur d'image susceptible de permettre l'acquisition d'instantanés (ou « snap-shots ») d'une scène, c'est-à-dire un capteur parfaitement adapté pour l'acquisition d'images d'objets en mouvement relatif par rapport au capteur.

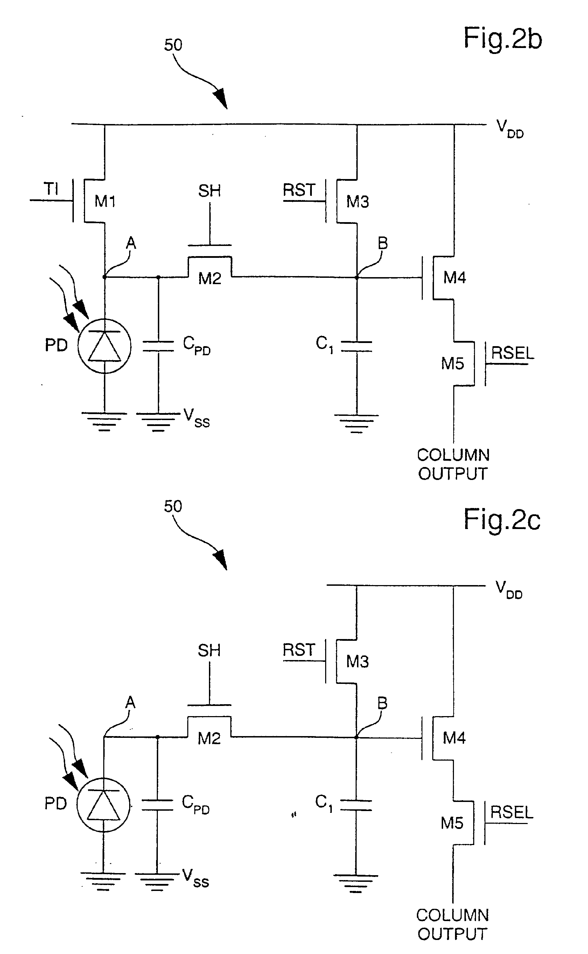

Diverses réalisations sont envisagées et présentées dans le document de l'art antérieur susmentionné. La figure 2b montre en particulier l'une de ces réalisations dans laquelle le pixel 50 comporte la photodiode PD polarisée inverse et cinq transistors M1 à M5 de type n-MOS. Chaque pixel 50 comporte un noeud mémoire, désigné B, formé d'une capacité (capacité C1) et protégé de la lumière, par exemple par une couche de protection métallique.

Selon l'article susmentionné, le pixel opère selon un mode d'intégration et le transistor M1 assure l'initialisation de la photodiode PD à une tension déterminée avant chaque période d'intégration. Le transistor M2 assure l'échantillonnage de la charge accumulée par la photodiode PD et la mémorisation du signal ainsi échantillonné sur le noeud mémoire B. Ce transistor M2 assure par ailleurs un isolement ou découplage de la photodiode PD et du noeud mémoire B. Le transistor M3 assure notamment l'initialisation du noeud mémoire B à une tension déterminée. Le transistor M4 est un transistor à "source suiveuse" ("source follower transistor") et le transistor M5 est un transistor de sélection de ligne et assure, lors du processus de lecture, le transfert de la tension du transistor M4 sur un bus de sortie commun à tous les pixels dans une colonne. Les signaux appliqués sur cette structure comprennent une tension d'alimentation haute V_{DD} et une tension d'alimentation basse V_{SS} formant masse, un premier signal d'initialisation TI, un signal de couplage SH, un second signal d'initialisation RST, et un signal de sélection de ligne RSEL.

Une première borne de la photodiode PD est connectée à la masse V_{SS} et l'autre borne est connectées aux terminaux de source des transistors M1 et M2 dont les terminaux de grille sont respectivement commandés par les signaux TI et SH. Le noeud de connexion entre la photodiode PD et les terminaux de sources des transistors M1 et M2 sera désigné par la référence A dans la suite de la description. Les terminaux de drain des transistors M1, M3 et M4 sont connectés à la tension d'alimentation haute V_{DD}. Le second signal d'initialisation RST est appliqué sur le terminal de grille du transistor M3. Le terminal de source du transistor M3, le terminal de drain du transistor M2 et le terminal de grille du transistor M4 sont connectés ensemble au noeud mémoire B du pixel. Le terminal de source du transistor M4 est connecté, via le transistor de sélection de ligne M5, au bus de sortie commun à tous les pixels dans une colonne. Le signal de sélection de ligne RSEL est appliqué sur le terminal de grille du transistor M5.

On notera que la plupart des capteurs d'images CMOS adoptent une technique d'exposition dite de « rolling shutter », c'est-à-dire que l'exposition est effectuée ligne après ligne. Cette exposition non simultanée conduit inévitablement à une distorsion de l'image, en particulier lors de l'acquisition d'une image d'un objet en mouvement.

La structure de pixel illustrée dans les figures 2a et 2b est typiquement opérée selon un mode d'intégration, c'est-à-dire que les éléments photo-détecteurs sont tout d'abord initialisés à une tension déterminée puis soumis à une illumination durant une période de temps déterminée, les charges produites par les éléments photo-détecteurs étant accumulées ou intégrées durant cette période. Selon ce mode de fonctionnement, la réponse du pixel peut être qualifiée de linéaire. Un désavantage de ce mode de fonctionnement réside dans le fait que la dynamique du pixel est réduite.

Un désavantage de la structure illustrée dans la figure 2b réside dans le fait que la sensibilité du pixel est relativement réduite et notablement plus faible que celle d'un capteur CCD. En effet, étant donné que le transistor de couplage M2 est opéré comme commutateur pour remplir la fonction d'obturation électronique, le signal utile produit par la photodiode, c'est-à-dire les porteurs de charge accumulés par la photodiode PD, est divisé entre les capacités présentes sur les noeuds A et B du pixel de part et d'autre du transistor de couplage M2, à savoir la capacité C_{PD} de la photodiode PD et la capacité C1 du noeud mémoire B.

Une première solution permettant d'augmenter la sensibilité du capteur consiste à augmenter la surface photosensible du pixel. Une autre solution, pouvant être combinée à une augmentation de la surface photosensible du pixel, peut consister à ajouter de l'électronique d'amplification du signal au niveau du pixel. Ces solutions ne sont néanmoins pas adéquates car elles vont à l'encontre des tendances de miniaturisation et de réduction des coûts. Il existe donc un besoin pour une solution permettant d'augmenter la sensibilité d'un capteur d'image à obturation électronique du type susmentionné sans que cela n'implique une augmentation de la surface photosensible du capteur et/ou l'adjonction d'une électronique d'amplification.

Un but de la présente invention est ainsi de proposer une telle solution permettant d'accroître la sensibilité d'un capteur d'image à obturation électronique du type susmentionné.

Afin de répondre à ce but, la présente invention a pour objet un procédé permettant d'opérer un capteur d'image CMOS dont les caractéristiques sont énoncées dans la revendication 1.

Des modes de réalisations avantageux de la présente invention font l'objet des revendications dépendantes.

Un avantage de la présente invention réside dans le fait que la sensibilité d'un capteur d'image à obturation électronique utilisant une structure de pixel conforme à l'illustration générale de la figure 2a est augmentée sans nécessiter l'agrandissement de la surface photosensible du capteur ni complication additionnelle de l'électronique.

En effet, selon l'invention, les porteurs de charge produits par l'élément photo-détecteur sont intégralement transférés, durant la phase d'exposition, vers le noeud mémoire B et ceci pour autant que le potentiel du noeud mémoire B n'atteint pas le niveau de la barrière de potentiel définie par la tension intermédiaire, désignée V_{INT}, appliquée sur le terminal de grille du transistor couplant l'élément photo-détecteur et le moyen de stockage. Etant donné que ces porteurs de charge ne « voient » que la capacité du noeud mémoire du pixel, ils génèrent une variation de tension plus importante. Par ce mécanisme, la sensibilité du pixel est ainsi augmentée.

Selon un mode de mise en oeuvre particulièrement avantageux de l'invention adoptant la structure de pixel de la figure 2b, le transistor M1 placé du côté de l'élément photo-détecteur (dans ce cas la photodiode PD) est utilisé conjointement au transistor M2 pour réaliser la fonction d'obturation du pixel. Selon ce mode de mise en oeuvre, les porteurs de charge qui continuent à être générés par l'élément photo-détecteur sont avantageusement drainés via le transistor M1 et ne perturbent de la sorte pas le signal de mesure mémorisé sur le noeud mémoire du pixel.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1, déjà présentée, illustre schématiquement l'architecture conventionnelle d'un capteur d'image CMOS ;
- les figures 2a et 2b, déjà présentées, illustrent respectivement un schéma de principe et un schéma détaillé d'une structure connue d'un pixel du capteur d'image CMOS de la figure 1 ;
- la figure 2c montre un schéma détaillé d'une variante de la structure de pixel de la figure 2b ;
- la figure 3 montre un diagramme de l'évolution des signaux appliqués sur la structure de pixel de la figure 2c selon un premier mode de mise en oeuvre de l'invention ;
- la figure 4 montre les niveaux de potentiel engendrés par les tensions appliquées sur les grilles des transistors de la structure de la figure 2c opérée selon le mode de mise en oeuvre de la figure 3 ;
- la figure 5 montre un diagramme de l'évolution des signaux appliqués sur la structure de pixel de la figure 2b selon un second mode de mise en oeuvre, préféré, de l'invention ; et
- la figure 6 montre les niveaux de potentiel engendrés par les tensions appliquées sur les grilles des transistors de la structure de la figure 2b opérée selon le second mode de mise en oeuvre de la figure 5.

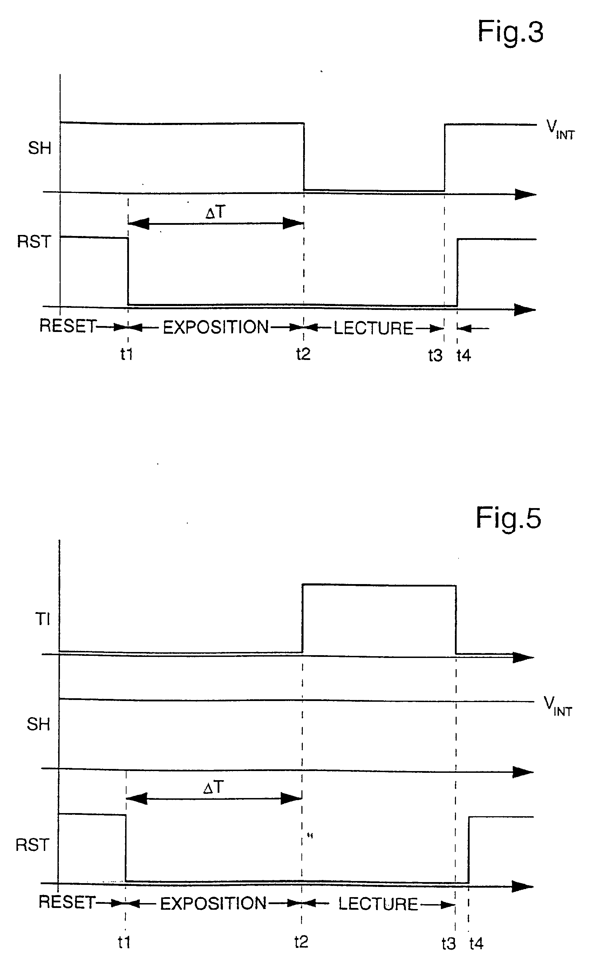

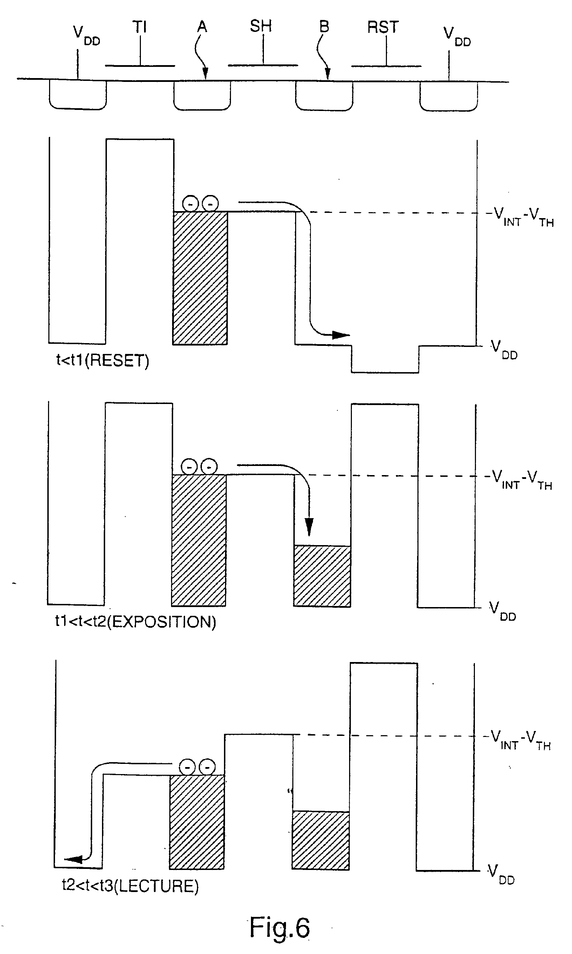

La figure 3 montre un premier mode de mise en oeuvre de l'invention permettant d'opérer un capteur d'image CMOS à obturation électronique avec une sensibilité accrue. Ce premier mode de mise en oeuvre est appliqué à une structure de pixel conforme à l'illustration de la figure 2c. Cette structure de pixel diffère de la structure illustrée dans la figure 2b en ce qu'elle ne comporte pas le transistor MOS M1 utilisé notamment pour initialiser la tension V_{OS} aux bornes de la photodiode PD. On comprendra néanmoins que le mode de mise en oeuvre qui va maintenant être décrit en détail peut parfaitement être appliqué à la structure de la figure 2b dès lors que le transistor M1 est maintenu à un état non conducteur. On verra néanmoins en référence aux figures 5 et 6 que ce transistor M1 peut avantageusement être utilisé pour participer à la fonction d'obturation électronique du capteur d'image.

On comprendra en outre que les divers mode de mise en oeuvre du procédé selon la présente invention ne sont pas limitées à l'opération d'une structure telle que la structure illustrée dans la figure 2b ou dans la figure 2c, mais peuvent être appliquées de manière analogue à tout type de structure se présentant schématiquement sous la forme de la structure illustrée à la figure 2a, c'est-à-dire une structure comportant un élément photo-détecteur et un moyen de stockage susceptible d'être couplé à l'élément photo-détecteur à un instant déterminé afin de produire et mémoriser un signal de mesure représentatif des porteurs de charge produits par l'élément photo-détecteur au cours de l'exposition, cette structure présentant au moins un transistor MOS connecté par ses terminaux de source et de drain à l'élément photo-détecteur PD, d'une part, et au moyen de stockage C1, d'autre part. Les structures illustrées dans les figures 2b et 2c constituent néanmoins une structure simple et particulièrement avantageuse.

La figure 3 montre ainsi un diagramme temporel de l'évolution des signaux de commande SH et RST appliqués respectivement sur les transistors M2 et M3 de la structure de pixel de la figure 2c. Selon ce premier mode de mise en oeuvre, le signal de commande SH appliqué sur le transistor M2 est maintenu, durant une phase d'initialisation et d'exposition, à une tension intermédiaire V_{INT} dont le niveau se situe entre les niveaux des tensions d'alimentation V_{SS} et V_{DD}. Etant donné que cette tension V_{INT} se situent entre les niveaux logiques de commande, on pourra la qualifier, par opposition, de tension de niveau analogique. Le transistor M3 est opéré conventionnellement comme commutateur afin d'initialiser le noeud mémoire B à une tension d'initialisation déterminée.

Plus particulièrement, l'acquisition d'une image se déroule tout d'abord par l'initialisation des pixels du capteur en appliquant la tension intermédiaire V_{INT} sur le terminal de grille du transistor M2 et en pulsant le signal RST appliqué sur le terminal de grille du transistor M3 à un niveau logique haut afin d'initialiser le noeud mémoire B à une tension d'initialisation déterminée supérieure à la tension intermédiaire V_{INT} appliquée sur le terminal de grille du transistor M2. Cette phase d'initialisation, désignée RESET, se déroule jusqu'à l'instant t1 dans la figure 3. Compte tenu de la tension appliquée sur le terminal de grille du transistor M2, la tension V_{OS} aux bornes de la photodiode PD est initialisée à une tension différente de la tension d'initialisation présente sur le noeud mémoire B, en l'occurrence une tension inférieure à cette tension d'initialisation.

A l'instant t1, le signal d'initialisation RST est amené à son niveau logique bas afin de rendre non conducteur le transistor M3 et ainsi découpler le noeud mémoire B de la tension d'alimentation V_{DD}. Le signal SH est maintenu durant cette phase dite d'exposition et les porteurs de charge produits par la photodiode PD commencent à s'accumuler dans le noeud mémoire B.

A l'instant t2, au terme d'une période de temps déterminée, désignée ΔT, l'accumulation des porteurs de charge sur le noeud mémoire B est interrompue par le passage du signal SH à un niveau logique bas, ceci ayant pour effet la constitution d'une barrière de potentielle entre le noeud A où sont produits les porteurs de charge et le noeud mémoire B permettant un découplage total de la photodiode PD et du noeud mémoire B.

Cette phase de mémorisation, durant laquelle l'opération de lecture est effectuée, est prolongée jusqu'aux instants t3 et t4 où le signal SH repasse à son niveau intermédiaire V_{INT} et où le signal d'initialisation RST est à nouveau pulsé au niveau logique haut afin d'initialiser le pixel.

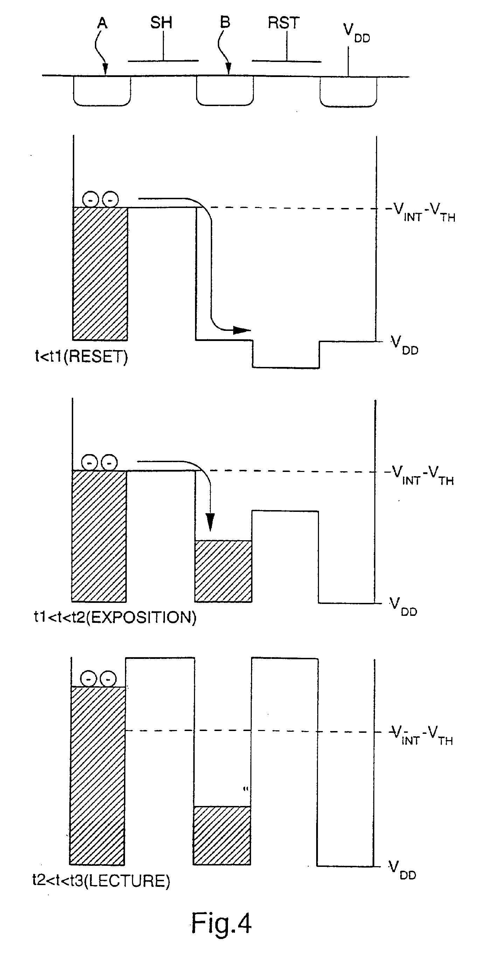

La figure 4 illustre schématiquement les niveaux de potentiel définis par les tensions appliquées sur les terminaux de grille des transistors M2 et M3 durant les phases d'initialisation, d'exposition et de lecture.

Ainsi, durant la phase d'initialisation (0 < t < t1), les noeuds A et B sont respectivement initialisés à des tensions sensiblement égales à V_{INT} - V_{TH} et V_{DD}, où V_{TH} est la tension de seuil du transistor M2. Durant la phase d'exposition (t1 < t < t2), les porteurs de charge produits par la photodiode PD au noeud A sont intégralement transférés au noeud mémoire B et s'y accumulent. Durant la phase de mémorisation et de lecture (t2 < t < t3), l'accumulation des porteurs de charge sur le noeud mémoire B est interrompue par la présence de la barrière de potentiel générée par le transistor M2.

Selon l'invention, les porteurs de charge produits par la photodiode PD sont ainsi intégralement transférés, durant la phase d'exposition, vers le noeud mémoire B et ceci pour autant que le potentiel du noeud mémoire B n'atteint pas le niveau de la barrière de potentiel définie par la tension appliquée sur le terminal de grille du transistor M2. Etant donné que ces porteurs de charge ne « voient » que la capacité du noeud mémoire B, ils génèrent une variation de tension plus importante. Par ce mécanisme, la sensibilité du pixel est ainsi augmentée.

La figure 5 montre ainsi un diagramme temporel de l'évolution des signaux de commande TI, SH et RST appliqués respectivement sur les transistors M1, M2 et M3 de la structure de pixel de la figure 2b. Selon ce second mode de mise en oeuvre, le signal de commande SH appliqué sur le transistor M2 est maintenu en continu à la tension intermédiaire V_{INT}. Le transistor M3 est opéré comme précédemment comme commutateur afin d'initialiser le noeud mémoire B à une tension d'initialisation déterminée. Le transistor M1 est également opéré comme commutateur afin de simultanément interrompre l'accumulation des porteurs de charge sur le noeud mémoire B et, avantageusement, drainer ces porteurs de charge afin qu'ils ne perturbent pas le signal présent sur le noeud mémoire B. En effet, sans cette fonction de drainage, les porteurs de charge qui continuent à être produits par la photodiode et s'accumulent au niveau du noeud A peuvent potentiellement perturber le signal de mesure mémorisé sur le noeud mémoire B par un phénomène de diffusion dans le substrat semi-conducteur.

L'acquisition d'une image se déroule ainsi tout d'abord par l'initialisation des pixels du capteur en pulsant le signal RST appliqué sur le terminal de grille du transistor M3 à un niveau logique haut afin d'initialiser le noeud mémoire B à une tension d'initialisation déterminée supérieure à la tension intermédiaire V_{INT} appliquée sur le terminal de grille du transistor M2.

Durant cette phase d'initialisation RESET, ainsi que durant la phase d'exposition ultérieure, le transistor M1 est maintenu à l'état non conducteur, le signal TI étant par exemple maintenu à un niveau logique bas comme illustré. On comprendra néanmoins qu'il suffit d'appliquer une tension sur le terminal de grille du transistor M1 telle qu'il ne soit pas conducteur. En admettant que les transistors M1 et M2 aient les mêmes caractéristiques, ceci implique que le signal TI doit avoir un niveau au moins inférieur à la tension intermédiaire V_{INT} appliquée sur le transistor M2. Le seuil de tension à partir duquel le transistor M1 est conducteur dépend bien évidemment de la tension de seuil de ce transistor définie par les caractéristiques dimensionnelles de ce transistor, à savoir la capacité de grille, la longueur et la largeur de son canal, ainsi que de la tension présente sur son terminal de source, c'est-à-dire le noeud A, qui est dépendante, durant l'étape d'initialisation et d'exposition, de la tension intermédiaire V_{INT} appliquée sur le terminal de grille du transistor M2 et des caractéristiques dimensionnelles de ce transistor M2.

Au terme de la phase d'initialisation, la tension V_{OS} aux bornes de la photodiode PD est, conformément à ce qui a déjà été décrit plus haut, initialisée à une tension différente de la tension d'initialisation présente sur le noeud mémoire B, en l'occurrence une tension inférieure à cette tension d'initialisation.

A l'instant t1, le signal d'initialisation RST est amené à son niveau logique bas afin de rendre non conducteur le transistor M3 et ainsi découpler le noeud mémoire B de la tension d'alimentation V_{DD}. Comme précédemment, les porteurs de charge produits par la photodiode PD commencent alors à s'accumuler dans le noeud mémoire B.

A l'instant t2, l'accumulation des porteurs de charge sur le noeud mémoire B est interrompue par le passage du signal TI, à un niveau tel que le transistor M1 est rendu conducteur, tel un niveau logique haut. On notera à nouveau qu'il suffit d'appliquer une tension sur le terminal de grille du transistor M1 telle que celui-ci est rendu conducteur. Dans l'hypothèse où les transistors M1 et M2 ont les mêmes caractéristiques ceci implique alors que la tension appliquée sur le terminal de grille du transistor M1 doit être supérieure à la tension intermédiaire V_{INT}. On notera par ailleurs que la tension appliquée sur le terminal de drain du transistor M1 peut être différente de la tension d'alimentation V_{DD}. On comprendra que cette tension doit néanmoins être choisie de sorte que le potentiel généré dans le substrat soit supérieur au potentiel défini par la tension intermédiaire V_{INT} appliquée sur le terminal de grille du transistor de couplage M2.

Comme déjà mentionné, le passage à l'état conducteur du transistor M1 a pour effet de drainer les porteurs de charge qui sont produits en continu par la photodiode PD via ce transistor M1 et ainsi effectivement découpler les noeuds A et B. Le transistor M1 commandé par le signal TI joue ainsi en quelque sorte le rôle de commande d'obturation similaire à la fonction qui était remplie jusqu'ici uniquement par le transistor M2. Plus exactement, en commandant la structure de la sorte, on profite de la barrière de potentiel intermédiaire générée par la tension intermédiaire V_{INT} appliquée sur le terminal de grille du transistor M2 pour effectuer le découplage des noeuds A et B.

La phase de mémorisation, durant laquelle l'opération de lecture est effectuée, est prolongée jusqu'aux instants t3 et t4 où le signal TI repasse à son niveau logique bas, dans cet exemple, et où le signal d'initialisation RST est à nouveau pulsé au niveau logique haut afin d'initialiser le pixel.

La figure 6 illustre schématiquement le niveau des potentiels définis par les tensions appliquées sur les terminaux de grille des transistors M1, M2 et M3 durant les phases d'initialisation, d'exposition et de lecture.

Ainsi, durant la phase d'initialisation (0 < t < t1), les noeuds A et B sont respectivement initialisés à des tensions sensiblement égales à V_{INT} - V_{TH} et V_{DD}, où V_{TH} est à nouveau la tension de seuil du transistor M2. Comme précédemment, durant la phase d'exposition (t1 < t < t2), les porteurs de charge produits par la photodiode PD au noeud A sont intégralement transférés au noeud mémoire B et s'y accumulent. Durant la phase de mémorisation et de lecture (t2 < t < t3), l'accumulation des porteurs de charge sur le noeud mémoire B est interrompue par le passage à l'état conducteur du transistor M1 et le drainage, via ce transistor M1, des porteurs de charge produits par la photodiode PD.

On notera que, dès lors que le signal TI repasse à son niveau logique bas au terme de la phase de lecture, le niveau de tension au noeud A du pixel doit atteindre à nouveau son niveau d'initialisation fixé par la tension intermédiaire V_{INT} appliquée sur le terminal de grille du transistor M2 avant qu'une exposition ultérieure du pixel puisse être entreprise. Ce « temps mort » est directement dépendant de la différence entre le niveau de tension appliqué sur le transistor M1 lors de la phase de lecture et le niveau de tension intermédiaire V_{INT} appliqué sur le terminal de grille du transistor M2. Plus cette différence est importante, plus ce « temps mort » est important. Durant la phase de lecture, il est donc préférable d'appliquer sur le terminal de grille du transistor M1 une tension supérieure à la tension intermédiaire V_{INT} mais néanmoins sensiblement égale de sorte que le « temps mort » est réduit à un minimum tout en garantissant que l'obturation électronique et le drainage des porteurs de charge aient lieu.

On notera cependant que le « temps mort » du pixel peut être mis à profit pour réaliser une opération de pré-traitement au niveau du pixel. En effet, la différence entre les niveaux de tension appliqués sur les terminaux de grilles des transistors M1 et M2 pourrait être choisie de manière à « filtrer » les signaux des pixels dont le niveau d'illumination est plus faible qu'un seuil d'illumination déterminé. De la sorte, seuls les signaux émanant des pixels dont le niveau d'illumination dépasse ce seuil d'illumination seraient stockés sur les noeuds mémoires des pixels concernés.

Dans cette optique de pré-traitement, le déroulement des étapes du procédé peut par exemple être comme suit, en admettant que la tension intermédiaire V_{INT} est maintenue en continu sur le terminal de grille du transistor M2 :
- durant l'étape d'initialisation, le noeud mémoire B est initialisé comme précédemment au moyen du transistor M3 et la photodiode PD est initialisée au moyen du transistor M1 ;
- durant l'étape d'exposition, les transistors M1 et M3 sont tous deux rendus non conducteurs de sorte que les porteurs de charges s'accumulent sur le noeud A et, si le niveau d'illumination est suffisant et/ou l'exposition suffisamment longue, sont transférés sur le noeud mémoire B ; et
- durant l'étape de mémorisation, le transistor M3 est maintenu à l'état non conducteur et le transistor M1 est à nouveau rendu conducteur de manière à interrompre l'accumulation (si le niveau d'illumination est suffisant) des porteurs de charges sur le noeud mémoire B et drainer les porteurs de charges qui continuent à être produits par la photodiode PD. Dans les diverses variantes qui ont été présentées ci-dessus, l'opération de lecture peut être effectuée selon une technique connue de l'homme du métier sous la dénomination "Correlated Double Sampling" ou CDS. Selon cette technique connue, l'opération de lecture de chaque ligne se décompose en une première phase de lecture de la tension présente sur les noeuds mémoires B des pixels dans une ligne suivie d'une seconde phase de lecture durant laquelle les noeuds mémoires des pixels dans la ligne sont réinitialisés, en principe au moyen du transistor M3. Un signal formé de la différence entre la tension échantillonnée mesurée et la tension d'initialisation du noeud mémoire est alors produit pour chaque pixel. Cette technique permet la suppression du "bruit stable" ou "fixed pattern noise", c'est-à-dire la suppression du bruit présent sur chaque pixel du capteur et qui est dû aux légères différences de sensibilité qui peuvent exister entre les pixels. Tant le signal de sélection de ligne RSEL que le second signal d'initialisation RST sont ainsi appliqués ligne par ligne durant cette phase de lecture.

Au titre d'amélioration contre-le phénomène de diffusion de porteur de charge dans le substrat semi-conducteur, il est préférable de faire appel à des photodiodes de type n-well, c'est-à-dire des photodiodes formées dans des caissons de type n. Cette structure offre l'avantage de constituer un meilleur obstacle à la diffusion de porteurs de charge qu'une structure de photodiode formée conventionnellement, par exemple d'une simple région de diffusion de type n.

De nombreuses modifications et/ou améliorations de la présente invention peuvent être envisagées sans sortir du cadre de l'invention définie par les revendications annexées. En particulier, la structure du pixel utilisée à titre d'exemple pour illustrer le procédé selon la présente invention pourrait dans le principe être réalisée au moyen d'une technologie p-MOS complémentaire ou le cas échéant comprendre des transistors additionnels.

## Revendications

1. Procédé permettant d'opérer un capteur d'image CMOS comportant une pluralité de pixels (50), chacun desdits pixels (50) comportant un élément photo-détecteur (PD) produisant des porteurs de charge en proportion de son illumination et un moyen de stockage (C1) susceptible d'être couplé et découplé dudit élément photo-détecteur (PD) à un instant déterminé afin de mémoriser, sur un noeud mémoire (B) dudit pixel (50), un signal de mesure représentatif desdits porteurs de charge produits par ledit élément photo-détecteur (PD) durant une étape d'exposition,
chaque pixel comprenant un premier transistor MOS (M2) comprenant des terminaux de grille, de source et de drain, ce premier transistor (M2) étant connecté par ses terminaux de source et de drain respectivement au dit élément photo-détecteur (PD) et au dit moyen de stockage (C1),
ce procédé étant **caractérisé en ce que**, au moins lors de ladite étape d'exposition, on applique une tension de niveau intermédiaire (V_{INT}) sur le terminal de grille dudit premier transistor (M2), cette tension intermédiaire (V_{INT}) étant sélectionnée de sorte que les porteurs de charge produits par ledit élément photo-détecteur (PD) durant ladite étape d'exposition sont intégralement transférés, à partir d'un seuil d'illumination déterminé du pixel, via ledit premier transistor (M2) sur ledit moyen de stockage (C1).

2. Procédé selon la revendication 1, **caractérisé en ce que** les porteurs de charge produits par ledit élément photo-détecteur (PD) durant ladite étape d'exposition sont intégralement transférés sur ledit moyen de stockage (C1) dès lors que le pixel (50) est illuminé,
et **en ce que** ce procédé comprend, préalablement à ladite étape d'exposition, une étape d'initialisation consistant à :
- initialiser ledit noeud mémoire (B) à une tension d'initialisation supérieure à la tension déterminée par la tension intermédiaire (V_{INT}) appliquée sur le terminal de grille dudit premier transistor (M2), et
- initialiser ledit élément photo-détecteur (PD), via ledit premier transistor (M2), à une tension d'initialisation inférieure à la tension d'initialisation du noeud mémoire (B), la tension d'initialisation de l'élément photo-détecteur (PD) étant déterminée par la tension intermédiaire (V_{INT}) appliquée sur le terminal de grille dudit premier transistor (M2).

3. Procédé selon la revendication 2, **caractérisé en ce que** chaque pixel (50) comporte :
- une photodiode (PD) polarisée inverse formant ledit élément photo-détecteur connectée, d'une part, à une première tension d'alimentation (V_{SS}) et, d'autre part, au terminal de source dudit premier transistor (M2) ; et
- un second transistor MOS (M3) comprenant des terminaux de grille, de source et de drain, le terminal de source de ce second transistor (M3) étant connecté au terminal de drain dudit premier transistor (M2) et formant ledit noeud mémoire (B) du pixel, et le terminal de drain de ce second transistor (M3) étant connecté à une seconde tension d'alimentation (V_{DD}),
ladite tension intermédiaire (V_{INT}) étant choisie supérieure à ladite première tension d'alimentation (V_{SS}) et inférieure à ladite seconde tension d'alimentation (V_{DD}).

4. Procédé selon la revendication 3, **caractérisée en ce qu'**il comporte les étapes suivantes :
a) une étape d'initialisation consistant à appliquer ladite tension intermédiaire (V_{INT}) sur le terminal de grille dudit premier transistor (M2) et à rendre conducteur ledit second transistor (M3) de sorte que ledit noeud mémoire (B) est initialisé à une tension d'initialisation déterminée supérieure à la tension présente sur le terminal de source dudit premier transistor (M2) ;
b) une étape d'exposition consistant à maintenir ladite tension intermédiaire (V_{INT}) sur le terminal de grille dudit premier transistor (M2) et à rendre non conducteur ledit second transistor (M3) afin de libérer ledit noeud mémoire (B) de ladite tension d'initialisation déterminée ; et
c) une étape de mémorisation consistant à découpler ladite photodiode (PD) et ledit moyen de stockage (C1), ledit signal de mesure étant alors mémorisé sur ledit noeud mémoire (B).

5. Procédé selon la revendication 4, **caractérisé en ce que** ladite photodiode (PD) et ledit moyen de stockage (C1) sont découplés lors de ladite étape de mémorisation c) en appliquant une tension sur le terminal de grille dudit premier transistor (M2) telle que ce transistor est rendu non conducteur.

6. Procédé selon la revendication 4, **caractérisé en ce que** chaque pixel (50) comporte en outre un troisième transistor MOS (M1) comprenant des terminaux de grille, de source et de drain, les terminaux de source et de drain de ce troisième transistor (M1) étant respectivement connectés au terminal de source dudit premier transistor (M2) et à une troisième tension d'alimentation, préférablement égale à ladite seconde tension d'alimentation (V_{DD}), supérieure à ladite tension intermédiaire (V_{INT}),
**en ce que** ladite tension intermédiaire (V_{INT}) est maintenue en continu sur le terminal de grille dudit premier transistor (M2),
et **en ce que** ladite photodiode (PD) et ledit moyen de stockage (C1) sont découplés, lors de ladite étape de mémorisation c); en appliquant une tension sur le terminal de grille dudit troisième transistor (M1) suffisante pour le rendre conducteur et pour que les porteurs de charge produits par ladite photodiode (PD) soient drainés via ce troisième transistor (M1).

7. Procédé selon la revendication 1, **caractérisé en ce que** chaque pixel (50) comporte :
- une photodiode (PD) polarisée inverse formant ledit élément photo-détecteur connectée, d'une part, à une première tension d'alimentation (V_{SS}) et, d'autre part, au terminal de source dudit premier transistor (M2) ;
- un second transistor MOS (M3) comprenant des terminaux de grille, de source et de drain, le terminal de source de ce second transistor (M3) étant connecté au terminal de drain dudit premier transistor (M2) et formant ledit noeud mémoire (B) du pixel, et le terminal de drain de ce second transistor (M3) étant connecté à une seconde tension d'alimentation (V_{DD}) ; et
- un troisième transistor MOS (M1) comprenant des terminaux de grille, de source et de drain, les terminaux de source et de drain de ce troisième transistor (M1) étant respectivement connectés au terminal de source dudit premier transistor (M2) et à une troisième tension d'alimentation, préférablement égale à ladite seconde tension d'alimentation (V_{DD}),
ladite tension intermédiaire (V_{INT}) étant choisie supérieure à ladite première tension d'alimentation (V_{SS}) et inférieure aux dites seconde et troisième tensions d'alimentation (V_{DD}).
**en ce que** ladite tension intermédiaire (V_{INT}) est maintenue en continu sur le terminal de grille dudit premier transistor (M2),
et **en ce que** le procédé comporte les étapes suivantes :
a) une étape d'initialisation consistant, d'une part, à initialiser ledit noeud mémoire (B) à une tension d'initialisation supérieure à la tension déterminée par la tension intermédiaire (V_{INT}) appliquée sur le terminal de grille dudit premier transistor (M2), et, d'autre part, à initialiser ladite photodiode (PD), au moyen dudit troisième transistor (M1), à une tension d'initialisation déterminée supérieure à la tension déterminée par la tension intermédiaire (VINT) appliquée sur le terminal de grille dudit premier transistor (M2) ;
b) une étape d'exposition consistant à rendre non conducteurs lesdits second (M3) et troisième (M1) transistors de sorte que les porteurs de charge s'accumulent tout d'abord sur le terminal de source dudit premier transistor (M2) et, si le niveau d'illumination du pixel est suffisant et/ou l'étape d'exposition suffisamment longue, sont transférés sur ledit noeud mémoire (B) ; et
c) une étape de mémorisation consistant à découpler ladite photodiode (PD) et ledit moyen de stockage (C1), ledit signal de mesure étant alors mémorisé sur ledit noeud mémoire (B).

8. Procédé selon la revendication 7, **caractérisé en ce que** ladite photodiode (PD) et ledit moyen de stockage (C1) sont découplés, lors de ladite étape de mémorisation c), en appliquant une tension sur le terminal de grille dudit troisième transistor (M1) suffisante pour le rendre conducteur et pour que les porteurs de charge produits par ladite photodiode (PD) soient drainés via ce troisième transistor (M1), cette tension étant préférablement égale à la tension appliquée sur ce troisième transistor (M1) lors de ladite étape d'initialisation a).

9. Procédé selon l'une quelconque des revendications 3 à 7, **caractérisé en ce que** la photodiode (PD) est formée dans un caisson de type n et **en ce que** lesdits transistors (M1 à M3) sont des transistors n-MOS.

10. Procédé selon l'une quelconque des revendications précédentes, **caractérisé en ce que** ledit moyen de stockage (C1) est formé d'une capacité protégée de la lumière par une couche métallique.
